# FASCICULE DE BREVET EUROPEEN

(11) **EP 3 860 893 B1**
(45) Date de publication et mention de la délivrance du brevet: **02.11.2022**
(21) Numéro de dépôt: 19794596.7
(22) Date de dépôt: 16.09.2019
(51) Int. Cl.: B60W 30/08, B60W 30/09, B60W 50/029

(54) **SÉCURISATION D'UNE FONCTION D'AIDE À L'ÉVITEMENT PAR BORNAGE TEMPOREL**
SICHERUNG EINER VERMEIDUNGSUNTERSTÜTZUNGSFUNKTION DURCH ZEITLICHE BEGRENZUNG
SECURING AN AVOIDANCE ASSISTANCE FUNCTION BY TEMPORAL CONFINEMENT

(30) Priorité: 03.10.2018 FR 1859152
(43) Date de publication de la demande: 11.08.2021
(73) Titulaire: PSA Automobiles SA, 78300 Poissy (FR)
(72) Inventeur: FLORES GONZALEZ, Jose Antonio, 92300 LEVALLOIS PERRET (FR); GURRET, Fabien, 92160 ANTONY (FR); THEEL, Florian, 92140 CLAMART (FR)
(86) Numéro de dépôt international: PCT/FR2019/052145
(87) Numéro de publication internationale: WO 2020/070401

(56) Documents cités:
- DE-A1-102010 045 694
- DE-A1-102013 211 643
- DE-A1-102013 211 645
- US-A1- 2016 152 236

## Description

La présente invention appartient au domaine de l'assistance à la conduite. Elle concerne en particulier un procédé de sécurisation d'une fonction d'aide à l'évitement dans lequel un bornage temporel est utilisé.

Elle est particulièrement avantageuse dans le cas d'un véhicule automobile autonome de niveau 2 circulant sur une route à chaussées séparées dans le barème de l'OICA, pour Organisation International des Constructeurs Automobiles.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA.

On entend par « route » tout moyen de communication impliquant un déplacement physique d'un véhicule. Une route nationale, départementale, locale, européenne, internationale, une autoroute nationale, européenne, internationale, un chemin forestier, un parcours pour dispositifs autonomes de rangement d'un entrepôt de stockage, etc. sont des exemples de routes.

La route comprend au moins une chaussée. On entend par « chaussée » tout moyen physique apte à supporter le déplacement d'un véhicule. Une autoroute comprend typiquement deux chaussées séparées par un terre-plein central.

La chaussée comprend au moins une voie. On entend par « voie » toute portion de chaussée affectée à une file de véhicule. Une chaussée d'une autoroute comprend typiquement au moins deux voies de circulation. Une voie d'insertion sur l'autoroute, une voie unique dans un tunnel, une voie de circulation à sens unique située dans une ville, etc. sont des exemples de voies.

La fonction d'aide à l'évitement est connue, notamment sous le nom de fonction ESA, Evasive Steer Assist anglais, pour assistance directionnelle à l'évitement en français.

La fonction d'assistance à l'évitement est mise en œuvre sur détection d'un objet par au moins un capteur du véhicule. Le capteur est une caméra, un radar, un lidar, un laser, etc.

On connait de DE102010045694 un procédé de prévention de collision. On connait de DE102013211643 un système d'évitement et d'assistance au freinage pour véhicules automobiles. On connait de DE102013211645 un assistant de manœuvre d'évitement pour véhicule automobile.

La détection d'objet par de tels capteur n'est pas garantie. En particulier, le niveau de sécurité associé à une telle détection est aujourd'hui insuffisant, quantifié par le niveau ASIL QM au sens de la norme ISO 26262.

Ainsi, les fausses détections d'objets par les capteurs sont possibles et très dangereuses. Différentes actions sur la direction du véhicule ou directement sur les roues, via une fonction de type ESP, pour en anglais, Electronic Stability Program, et en français correcteur électronique de trajectoire, sont envisagés par la fonction d'aide à l'évitement pour éviter l'objet détecté.

Si l'objet a été faussement détecté et que la direction et / ou l'ESP sont utilisés pour prévoir une assistance au conducteur à l'évitement, il est très difficile pour le conducteur de maintenir son véhicule en ligne droite. En effet, la direction va par exemple se ramollir dans une direction et l'ESP freiner les roues sur un côté du véhicule. En conséquence, le conducteur devra contrer la direction et le freinage dissymétrique des roues (le véhicule ayant tendance à rouler « en crabe »).

La présente invention vient améliorer la situation.

A cet effet, un premier aspect de l'invention concerne un procédé de sécurisation d'une fonction d'assistance à l'évitement d'un objet par un véhicule évoluant sur une chaussée, l'évitement comportant une première manœuvre latérale, vers la droite ou vers la gauche, pour éviter l'objet, le procédé comportant les étapes de :
- ouverture d'une fenêtre temporelle d'évitement d'une durée prédéterminée sur réception d'un message de déclenchement de l'évitement généré à partir d'une détection de l'objet par un capteur du véhicule ;
- génération d'une autorisation de mise en œuvre de l'assistance à la première manœuvre latérale pendant la durée de la fenêtre temporelle d'évitement ;
- lorsque la durée prédéterminée de la fenêtre temporelle d'évitement est écoulée, génération d'une interdiction de mise en œuvre de l'assistance à la première manœuvre latérale.

Un bornage temporel de la fonction d'assistance à l'évitement est donc prévu.

Les tests effectués par les inventeurs montrent qu'il est fréquent que les fausses détection d'objets s'étalent dans le temps. Ainsi, une défaillance d'un capteur s'étale très fréquemment dans le temps, parfois même jusqu'à ce que le capteur soit remplacé au garage.

Par exemple, il est habituel que des projections (grain de sable, terre, etc.) viennent se positionner dans le champ d'un capteur (typiquement sur la caméra) et entrainent de fausses détections s'étalant dans le temps.

Prévoir un mécanisme de sécurisation par bornage dans le temps de l'autorisation de la fonction d'aide à l'évitement évite, de manière simple et efficace, les désagréments engendrés par de telles fausses détections longues.

Dans un mode de réalisation, l'assistance à la première manœuvre latérale comporte une application d'un premier couple à l'un au moins des organes de la direction du véhicule pour faciliter une première action du conducteur du véhicule sur la direction, la première action visant à effectuer la première manœuvre. Ainsi, l'action du conducteur sur la direction est facilitée, sans pour autant que le véhicule ne fasse tout seul une embardée, susceptible de générer un accident.

Dans un mode de réalisation, l'évitement comporte en outre une deuxième manœuvre latérale, dans le sens opposé au sens de la première manœuvre, pour redresser le véhicule sur la chaussée.

Dans un mode de réalisation, l'assistance à la deuxième manœuvre latérale comporte une application d'un deuxième couple à l'un au moins des organes de la direction du véhicule pour faciliter une deuxième action du conducteur du véhicule sur la direction, la deuxième action visant à effectuer la deuxième manœuvre. Ici aussi, l'action du conducteur sur la direction est facilitée, sans pour autant que le véhicule ne fasse tout seul une embardée, susceptible de générer un accident.

Dans un mode de réalisation, le procédé comporte en outre les étapes de :
- acquisition d'une valeur de vitesse angulaire ou d'angle de la direction du véhicule ;
- si la valeur de la vitesse angulaire ou d'angle dépasse une valeur prédéterminée, ouverture d'une fenêtre temporelle de redressement d'une durée prédéterminée de redressement ;
- génération d'une autorisation de mise en œuvre de l'assistance à la deuxième manœuvre latérale pendant la durée de la fenêtre temporelle de redressement ;
- lorsque la durée prédéterminée de la fenêtre temporelle de redressement est écoulée, génération d'une interdiction de mise en œuvre de l'assistance à la deuxième manœuvre latérale.

Ouvrir ainsi une deuxième fenêtre, la fenêtre temporelle de redressement, rend possible la mise en œuvre de la manœuvre de redressement, en continuant de garantir un contrôle temporel de la fonction.

En outre, contrôler l'autorisation de l'assistance à l'évitement par une mesure d'angle de direction est particulièrement pertinent en termes de sécurité de fonctionnement. En effet, le niveau de sécurité associé à une telle mesure est satisfaisant. En particulier, il bénéficie d'un niveau de sécurité ASIL D.

Dans un mode de réalisation, le message de déclenchement comporte une indication du sens, droite ou gauche, pour la première manœuvre latérale.

Un deuxième aspect de l'invention vise un programme informatique comportant des instructions pour la mise en œuvre du procédé selon le premier aspect de l'invention, lorsque ces instructions sont exécutées par un processeur.

Un troisième aspect de l'invention vise un dispositif de sécurisation d'une fonction d'assistance à l'évitement d'un objet par un véhicule évoluant sur une chaussée, l'évitement comportant une première manœuvre latérale, vers la droite ou vers la gauche, pour éviter l'objet, le dispositif comportant :
- un capteur pour une détection de l'objet ;
- au moins un processeur et au moins une mémoire configurés pour effectuer les opérations de :
   ∘ ouverture d'une fenêtre temporelle d'évitement d'une durée prédéterminée sur réception d'un message de déclenchement de l'évitement généré à partir de la détection de l'objet par le capteur ;
   ∘ génération d'une autorisation de mise en œuvre de l'assistance à la première manœuvre latérale pendant la durée de la fenêtre temporelle d'évitement ;
   ∘ lorsque la durée prédéterminée de la fenêtre temporelle d'évitement est écoulée, génération d'une interdiction de mise en œuvre de l'assistance à la première manœuvre latérale.

Un quatrième aspect de l'invention vise un véhicule comportant le dispositif selon le troisième aspect de l'invention.

D'autres caractéristiques et avantages de l'invention apparaîtront à l'examen de la description détaillée ci-après, et des dessins annexés sur lesquels :
- la figure 1 illustre un contexte d'application de l'invention ;
- la figure 2 illustre un procédé selon l'invention ;
- la figure 3 illustre les fenêtres temporelles d'activation de l'assistance à l'évitement, selon un mode de réalisation de l'invention ;
- la figure 4 illustre un dispositif, selon un mode de réalisation de l'invention.

L'invention est décrite ci-après dans son application, non limitative, au cas d'un véhicule automobile circulant sur une autoroute comportant deux chaussées séparées par un terre-plein central et comportant chacune deux voies. D'autres applications telles qu'un autobus sur une voie dédiée ou encore une motocyclette sur une route de campagne sont également envisageables.

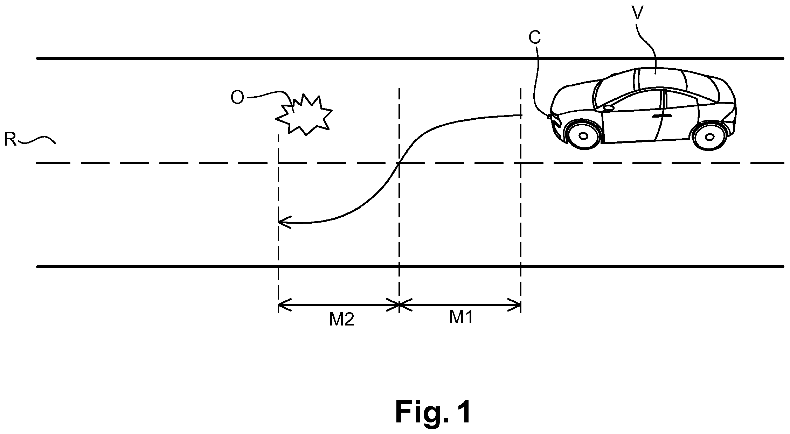

La **figure 1** illustre une chaussée d'autoroute R comportant deux voies. Sur l'une de deux voies circule un véhicule V comportant au moins un capteur C.

Le capteur C détecte un objet 0 situé dans la trajectoire du véhicule V.

La fonction d'assistance à l'évitement, lorsqu'elle est activée, propose une assistance au conducteur pour qu'il puisse éviter l'objet O. Pour ce faire une manœuvre en deux temps est envisagée, la manœuvre globale comportant une première manœuvre latérale M1 et une deuxième manœuvre latérale M2.

La première manœuvre latérale M1 consiste à faire une embardée dans un sens, ici sur la gauche du véhicule, pour éviter l'objet O.

Pour ce faire, l'assistance à la première manœuvre d'évitement comporte une application d'un premier couple à l'un au moins des organes de la direction du véhicule pour faciliter une première action du conducteur du véhicule sur la direction, la première action visant à effectuer la première manœuvre. Il s'agit par exemple de l'application par un moteur d'un couple sur la colonne de direction, sur le volant, sur tout élément de liaison au sol, etc. L'application d'un tel couple va faciliter l'orientation du volant sur la gauche par le conducteur afin d'augmenter la réactivité du changement de direction.

Il est également possible de faire fonctionner l'ESP du véhicule pour freiner / accélérer / diminuer le ralentissement de certaines roues du véhicule. Ici, par exemple, les roues avant gauche et arrière gauche peuvent être freinées pour faciliter l'embardée sur la gauche.

La deuxième manœuvre latérale M2 consiste à redresser le véhicule dans le sens opposé à celui de la première manœuvre latérale M1, ici sur la droite du véhicule.

De la même manière que pour la première manœuvre, l'assistance à la deuxième manœuvre latérale comporte une application d'un deuxième couple à l'un au moins des organes de la direction du véhicule pour faciliter une deuxième action du conducteur du véhicule sur la direction, la deuxième action visant à effectuer la deuxième manœuvre. Il s'agit par exemple de l'application par un moteur d'un couple sur la colonne de direction, sur le volant, sur tout élément de liaison au sol, etc. L'application d'un tel couple va faciliter l'orientation du volant sur la gauche par le conducteur afin d'augmenter la réactivité du changement de direction. Il est également possible de faire fonctionner l'ESP du véhicule pour freiner / accélérer / diminuer le ralentissement de certaines roues du véhicule. Ici, par exemple, les roues avant gauche et arrière gauche peuvent être freinées pour faciliter l'embardée sur la gauche.

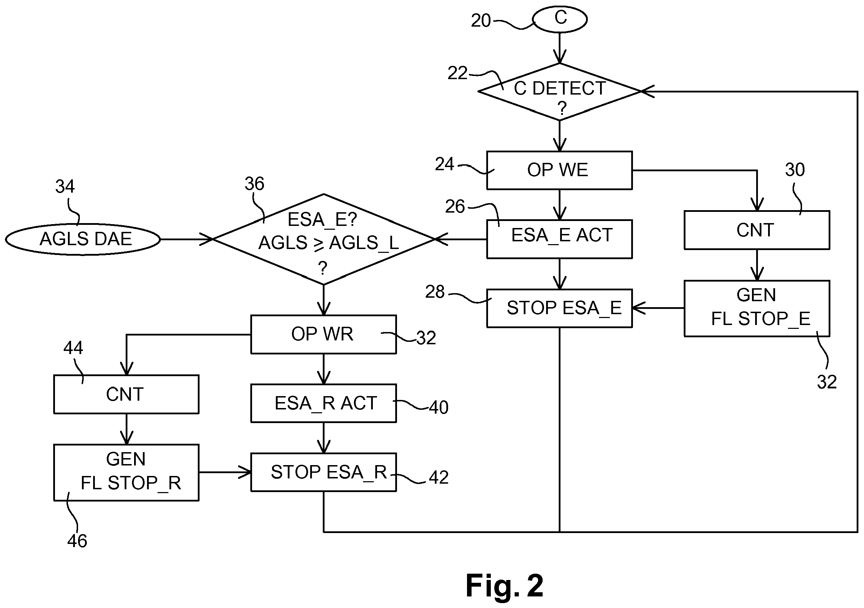

La **figure 2** illustre le procédé, selon un mode de réalisation de l'invention.

A l'étape 20, le capteur C du véhicule V acquiert des données relatives à la présence d'objets.

L'étape 22 est une étape de détection d'objets à partir des données du capteur C.

Si aucun objet n'est détecté, le procédé continue jusqu'à ce qu'un objet soit détecté.

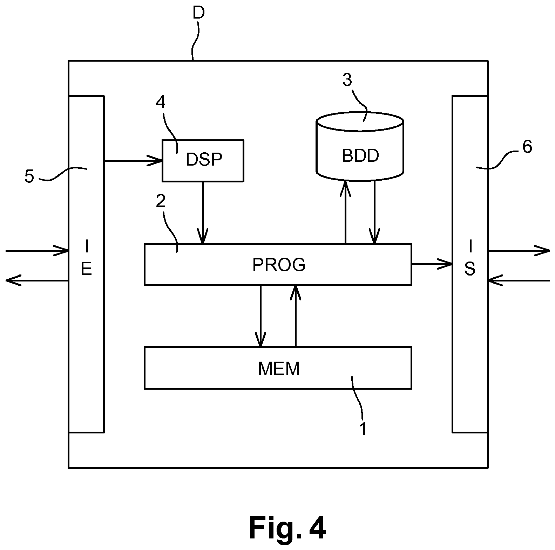

Si un objet est détecté, une fenêtre temporelle d'évitement d'une durée prédéterminée est ouverte à l'étape 24. En particulier, la détection de l'objet 0 a pour effet la génération, par le capteur C ou par un dispositif électronique en charge de la supervision du au moins capteur C, d'un message de déclenchement de l'évitement. La réception de ce message par un dispositif, tel que dispositif D décrit ci-après en référence à la figure 4, en charge de la mise en œuvre des étapes du procédé selon le présent mode de réalisation de l'invention génère alors l'ouverture de la fenêtre temporelle d'évitement. Dans un mode de réalisation, le dispositif électronique en charge de la supervision du au moins capteur C et le dispositif D sont confondus, le message de déclenchement étant reçu par un deuxième bloc logiciel depuis un premier bloc logiciel.

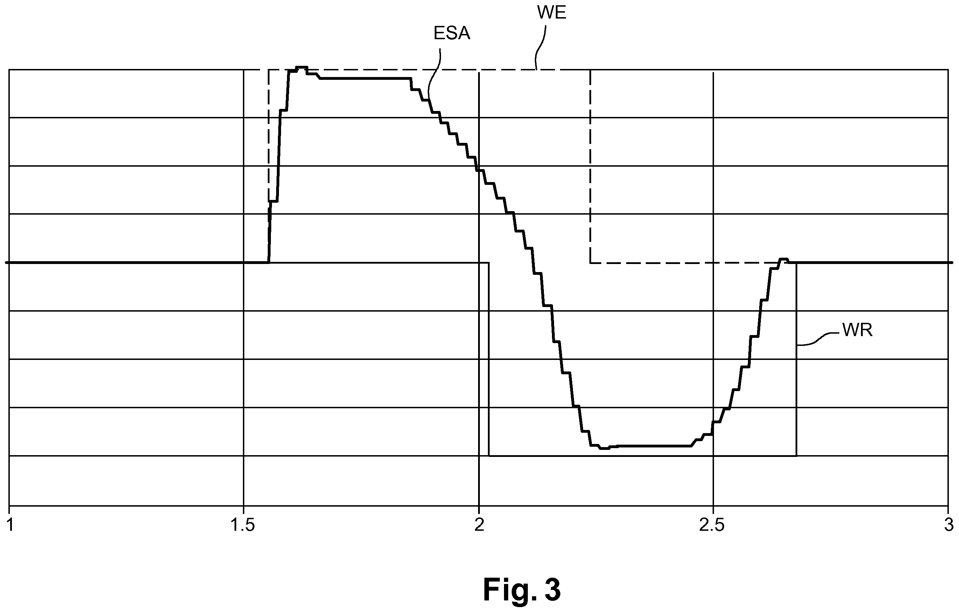

La fenêtre temporelle d'évitement est d'une durée prédéterminée. Dans un mode de réalisation, la durée prédéterminée est de l'ordre de la seconde, par exemple inférieure, supérieure ou égale à 1 seconde. Dans un autre mode de réalisation, la durée prédéterminée dépend de la vitesse du véhicule V, d'un mode de conduite dudit véhicule V, du type de chaussée sur laquelle évolue le véhicule V, d'actions faites par le conducteur, etc. L'illustration d'une telle fenêtre est donnée ci-après en référence à la figure 3.

La fenêtre temporelle d'évitement ayant été ouverte, une autorisation de mise en œuvre de l'assistance à la première manœuvre latérale est générée à l'étape 26. Ainsi, l'assistance à la première manœuvre latérale ESA_E est mise en œuvre.

En parallèle, à l'étape 30, un compteur est lancé et incrémenté. Lorsque le compteur arrive à échéance, c'est-à-dire que la fenêtre temporelle d'évitement est écoulée, une interdiction de mise en œuvre de l'assistance à la première manœuvre latérale est générée à l'étape 32.

L'interdiction de mise en œuvre de l'assistance a pour effet, à l'étape 28, de générer un arrêt de la fonction d'assistance à l'évitement ESA_E.

De plus, lorsque la fonction d'assistance à l'évitement ESA_E est activée, une surveillance de la vitesse angulaire AGLS de la direction du véhicule est mise en œuvre aux étapes 34 et 36.

En particulier, la vitesse angulaire AGSL de la direction est acquis à l'étape 34. L'angle utilisée pour déterminer la vitesse angulaire correspond à un angle volant, à un angle des roues avant avec l'axe du véhicule, ou encore à un angle d'un des organes de la direction.

A l'étape 36, il est vérifié que la vitesse angulaire AGSL ne dépasse pas une valeur prédéterminée. Dans un mode de réalisation, la valeur prédéterminée est de l'ordre de plusieurs dizaines de degrés par seconde. Dans un mode de réalisation particulier, la valeur prédéterminée est de 70 degrés par seconde ou de plus de 70 degrés par secondes. Dans un autre mode de réalisation, la valeur prédéterminée dépend de la vitesse du véhicule, d'un mode de conduite dudit véhicule V, du type de chaussée sur laquelle évolue le véhicule V, etc.

A l'étape 38, si la valeur de la vitesse angulaire dépasse une valeur prédéterminée, une fenêtre temporelle de redressement d'une durée prédéterminée de redressement est ouverte. Dans un mode de réalisation, la durée prédéterminée est de l'ordre de la seconde, par exemple inférieure, supérieure ou égale à 1 seconde. Dans un autre mode de réalisation, la durée prédéterminée dépend de la vitesse du véhicule V, d'un mode de conduite dudit véhicule V, du type de chaussée sur laquelle évolue le véhicule V, d'actions faites par le conducteur, etc. L'illustration de la fenêtre temporelle de redressement est donnée ci-après en référence à la figure 3.

La fenêtre temporelle de redressement ayant été ouverte, une autorisation de mise en œuvre de l'assistance à la deuxième manœuvre latérale est générée à l'étape 40. Ainsi, l'assistance à la deuxième manœuvre latérale ESA_R est mise en œuvre.

En parallèle, à l'étape 44, un compteur est lancé et incrémenté. Lorsque le compteur arrive à échéance, c'est-à-dire que la fenêtre temporelle de redressement est écoulée, une interdiction de mise en œuvre de l'assistance à la deuxième manœuvre latérale est générée à l'étape 46.

L'interdiction de mise en œuvre de l'assistance a pour effet, à l'étape 42, de générer un arrêt de la fonction d'assistance au redressement ESA_R.

Lorsque les deux fenêtres, la fenêtre temporelle d'évitement WE et la fenêtre temporelle de redressement WR, sont échues, le procédé reprend à l'étape 22 jusqu'à ce qu'un nouvel objet soit détecté.

La figure 3 illustre les deux fenêtres, la fenêtre temporelle d'évitement WE et la fenêtre temporelle de redressement WR, sur lesquelles la fonction d'assistance ESA est activée.

L'axe des ordonnées représente le couple de consigne pour la fonction d'assistance ESA. L'axe des abscisses représente le temps en secondes.

Il est visible sur la figure 3 que les fenêtre WE et WR se recoupent pendant quelques dixièmes de secondes. Ainsi, l'assistance est autorisée dans les deux sens lors du passage de la première manœuvre d'évitement à la deuxième manœuvre de redressement.

La **figure 4** représente un exemple de dispositif D compris dans la véhicule V. Ce dispositif D peut être utilisé en tant que dispositif centralisé en charge d'au moins certaines étapes du procédé décrit ci-avant en référence à la figure 2.

Ce dispositif D peut prendre la forme d'un boitier comprenant des circuits imprimés, de tout type d'ordinateur ou encore d'un smartphone.

Le dispositif D comprend une mémoire vive 1 pour stocker des instructions pour la mise en œuvre par un processeur 2 d'au moins une étape des procédés tels que décrits ci-avant. Le dispositif comporte aussi une mémoire de masse 3 pour le stockage de données destinées à être conservées après la mise en œuvre du procédé.

Le dispositif D peut en outre comporter un processeur de signal numérique (DSP) 4. Ce DSP 4 reçoit des données pour mettre en forme, démoduler et amplifier, de façon connue en soi ces données.

Le dispositif comporte également une interface d'entrée 5 pour la réception des données mises en œuvre par des procédés selon l'invention et une interface de sortie 6 pour la transmission des données mises en œuvre par les procédés.

La présente invention ne se limite pas aux formes de réalisation décrites ci-avant à titre d'exemples ; elle s'étend à d'autres variantes.

Ainsi, on a décrit ci-avant un exemple de réalisation dans lequel le véhicule évoluait sur une autoroute comporte deux chaussées de deux voies, les chaussées étant séparées par un terre-plein central. L'invention peut également être mise en œuvre pour d'autres types de routes, tels que des routes nationales à chaussée unique comportant deux voies, des autoroutes à chaussées séparées, chaque chaussée comprenant 6 voies, rues en ville, etc.

## Revendications

1. Procédé de sécurisation d'une fonction d'assistance à l'évitement d'un objet (0) par un véhicule (V) évoluant sur une chaussée (R), l'évitement comportant une première manœuvre latérale (M1), vers la droite ou vers la gauche, pour éviter l'objet, le procédé comportant les étapes de :
- ouverture (24) d'une fenêtre temporelle d'évitement (WE) d'une durée prédéterminée sur réception d'un message de déclenchement de l'évitement généré à partir d'une détection de l'objet par un capteur (C) du véhicule ;
- génération (26) d'une autorisation de mise en œuvre de l'assistance à la première manœuvre latérale pendant la durée de la fenêtre temporelle d'évitement ;
- lorsque la durée prédéterminée de la fenêtre temporelle d'évitement est écoulée, génération (32) d'une interdiction de mise en œuvre de l'assistance à la première manœuvre latérale.

2. Procédé selon la revendication 1, dans lequel l'assistance à la première manœuvre latérale comporte une application d'un premier couple à l'un au moins des organes de la direction du véhicule pour faciliter une première action du conducteur du véhicule sur la direction, la première action visant à effectuer la première manœuvre.

3. Procédé selon l'une des revendications précédentes, dans lequel l'évitement comporte en outre une deuxième manœuvre latérale (M2), dans le sens opposé au sens de la première manœuvre, pour redresser le véhicule sur la chaussée.

4. Procédé selon la revendication 3, dans lequel l'assistance à la deuxième manœuvre latérale comporte une application d'un deuxième couple à l'un au moins des organes de la direction du véhicule pour faciliter une deuxième action du conducteur du véhicule sur la direction, la deuxième action visant à effectuer la deuxième manœuvre.

5. Procédé selon l'une des revendications 3 ou 4, dans lequel le procédé comporte en outre les étapes de :
- acquisition (34) d'une valeur de vitesse angulaire ou d'angle de la direction du véhicule ;
- si la valeur de la vitesse angulaire ou la valeur d'angle dépasse une valeur prédéterminée, ouverture (38) d'une fenêtre temporelle de redressement (WR) d'une durée prédéterminée de redressement ;
- génération (40) d'une autorisation de mise en œuvre de l'assistance à la deuxième manœuvre latérale pendant la durée de la fenêtre temporelle de redressement ;
- lorsque la durée prédéterminée de la fenêtre temporelle de redressement est écoulée, génération (46) d'une interdiction de mise en œuvre de l'assistance à la deuxième manœuvre latérale.

6. Procédé selon l'une des revendications précédentes, dans lequel le message de déclenchement comporte une indication du sens, droite ou gauche, pour la première manœuvre latérale.

7. Programme informatique comportant des instructions pour la mise en œuvre du procédé selon l'une quelconque des revendications précédentes, lorsque ces instructions sont exécutées par un processeur (2).

8. Dispositif (D) de sécurisation d'une fonction d'assistance à l'évitement d'un objet par un véhicule évoluant sur une chaussée, l'évitement comportant une première manœuvre latérale, vers la droite ou vers la gauche, pour éviter l'objet, le dispositif comportant :
- un capteur (C) pour une détection de l'objet ;
- au moins un processeur (2) et au moins une mémoire (1) configurés pour effectuer les opérations de :
∘ ouverture d'une fenêtre temporelle d'évitement d'une durée prédéterminée sur réception d'un message de déclenchement de l'évitement généré à partir de la détection de l'objet par le capteur ;
∘ génération d'une autorisation de mise en œuvre de l'assistance à la première manœuvre latérale pendant la durée de la fenêtre temporelle d'évitement ;
∘ lorsque la durée prédéterminée de la fenêtre temporelle d'évitement est écoulée, génération d'une interdiction de mise en œuvre de l'assistance à la première manœuvre latérale.

9. Véhicule comportant le dispositif de sécurisation selon la revendication 8.

## Patentansprüche

1. Verfahren zur Sicherung einer Funktion zur Unterstützung des Ausweichens eines Objekts (O) durch ein Fahrzeug (V), das sich auf einer Fahrbahn (R) bewegt, wobei das Ausweichen ein erstes seitliches Manöver (M1) nach rechts oder nach links umfasst, um dem Objekt auszuweichen, wobei das Verfahren die folgenden Schritte umfasst: :
- Öffnen (24) eines Ausweichzeitfensters (WE) mit einer vorbestimmten Dauer bei Empfang einer Nachricht zur Auslösung des Ausweichens, die ausgehend von einer Erfassung des Objekts durch einen Sensor (C) des Fahrzeugs erzeugt wird ;
- Erzeugen (26) einer Genehmigung zur Durchführung der Unterstützung des ersten Seitenmanövers während der Dauer des Ausweichzeitfensters ;
- wenn die vorbestimmte Dauer des Ausweichzeitfensters abgelaufen ist, Erzeugen (32) eines Verbots des Einsatzes der Unterstützung für das erste Seitenmanöver.

2. . Verfahren nach Anspruch 1, wobei die Unterstützung des ersten Seitenmanövers das Anlegen eines ersten Drehmoments an mindestens eines der Lenkorgane des Fahrzeugs umfasst, um eine erste Aktion des Fahrers des Fahrzeugs auf die Lenkung zu erleichtern, wobei die erste Aktion auf die Durchführung des ersten Manövers abzielt.

3. . Verfahren nach einem der vorhergehenden Ansprüche, wobei das Ausweichen außerdem ein zweites seitliches Manöver (M2) in der der Richtung des ersten Manövers entgegengesetzten Richtung umfasst, um das Fahrzeug auf der Fahrbahn aufzurichten.

4. . Verfahren nach Anspruch 3, wobei die Unterstützung des zweiten seitlichen Manövers ein Anlegen eines zweiten Drehmoments an mindestens eines der Lenkorgane des Fahrzeugs umfasst, um eine zweite Aktion des Fahrers des Fahrzeugs auf die Lenkung zu erleichtern, wobei die zweite Aktion darauf abzielt, das zweite Manöver auszuführen.

5. . Verfahren nach einem der Ansprüche 3 oder 4, wobei das Verfahren ferner die folgenden Schritte umfasst: :
- Erfassen (34) eines Werts der Winkelgeschwindigkeit oder des Winkels der Lenkung des Fahrzeugs ;
- wenn der Winkelgeschwindigkeitswert oder der Winkelwert einen vorbestimmten Wert überschreitet, Öffnen (38) eines Gleichrichtungs-Zeitfensters (WR) mit einer vorbestimmten Gleichrichtungsdauer ;
- Erzeugen (40) einer Genehmigung zur Durchführung der Unterstützung des zweiten Seitenmanövers während der Dauer des Zeitfensters für die Begradigung ;
- wenn die vorbestimmte Zeitdauer des Zeitfensters für die Begradigung abgelaufen ist, Erzeugen (46) eines Verbots der Durchführung der Unterstützung für das zweite Seitenmanöver.

6. . Verfahren nach einem der vorhergehenden Ansprüche, wobei die Triggernachricht eine Angabe der Richtung, rechts oder links, für das erste Seitenmanöver enthält.

7. . Computerprogramm mit Anweisungen zur Durchführung des Verfahrens nach einem der vorhergehenden Ansprüche, wenn diese Anweisungen von einem Prozessor (2) ausgeführt werden.

8. . Vorrichtung (D) zur Sicherung einer Funktion zur Unterstützung des Ausweichens eines Objekts durch ein Fahrzeug, das sich auf einer Fahrbahn bewegt, wobei das Ausweichen ein erstes seitliches Manöver nach rechts oder nach links umfasst, um dem Objekt auszuweichen, wobei die Vorrichtung umfasst:
- einen Sensor (C) für eine Erfassung des Objekts ;
- mindestens einen Prozessor (2) und mindestens einen Speicher (1), die so konfiguriert sind, dass sie die folgenden Operationen durchführen: :
o Öffnen eines Vermeidungszeitfensters mit einer vorbestimmten Dauer nach Empfang einer Vermeidungsauslösemeldung, die aus der Erfassung des Objekts durch den Sensor generiert wird ;
∘ Generierung einer Genehmigung zur Durchführung der Unterstützung des ersten Seitenmanövers während der Dauer des Ausweichzeitfensters ;
∘ wenn die vorbestimmte Dauer des Ausweichzeitfensters abgelaufen ist, Erzeugen eines Verbots der Implementierung der Unterstützung des ersten Seitenmanövers.

9. . Fahrzeug mit der Sicherungsvorrichtung nach Anspruch 8.

## Claims

1. A method of securing a function of assisting the avoidance of an object (O) by a vehicle (V) travelling on a roadway (R), the avoidance comprising a first lateral manoeuvre (M1), to the right or to the left, to avoid the object, the method comprising the steps of :
- opening (24) an avoidance time window (WE) of a predetermined duration on receipt of an avoidance triggering message generated from a detection of the object by a sensor (C) of the vehicle
- generation (26) of an authorization to implement the assistance to the first lateral maneuver for the duration of the avoidance time window;
- when the predetermined duration of the avoidance time window has elapsed, generation (32) of a prohibition of implementation of the assistance to the first lateral maneuver.

2. The method of claim 1, wherein the first lateral maneuver assist comprises applying a first torque to at least one of the vehicle steering members to facilitate a first action by the vehicle operator on the steering, the first action to perform the first maneuver.

3. The method of any of the preceding claims, wherein the avoidance further comprises a second lateral maneuver (M2), in the opposite direction to the direction of the first maneuver, to right the vehicle on the roadway.

4. The method of claim 3, wherein assisting with the second lateral maneuver comprises applying a second torque to at least one of the vehicle's steering members to facilitate a second action by the vehicle operator on the steering, the second action to perform the second maneuver.

5. The method of any of claims 3 or 4, wherein the method further comprises the steps of:
- acquiring (34) a value of angular velocity or angle of the vehicle steering ;
- if the angular velocity value or angle value exceeds a predetermined value, opening (38) a recovery time window (WR) of a predetermined recovery duration; and
- generating (40) an authorization to implement the assistance to the second lateral maneuver for the duration of the recovery time window;
- when the predetermined duration of the recovery time window has elapsed, generating (46) a prohibition on the implementation of the second lateral maneuver assistance.

6. The method according to any of the preceding claims, wherein the triggering message includes an indication of the direction, right or left, for the first lateral maneuver.

7. A computer program comprising instructions for implementing the method according to any of the preceding claims, when these instructions are executed by a processor (2).

8. Device (D) for securing a function for assisting the avoidance of an object by a vehicle moving on a roadway, the avoidance comprising a first lateral maneuver, to the right or to the left, to avoid the object, the device comprising:
- a sensor (C) for detecting the object;
- at least one processor (2) and at least one memory (1) configured to carry out the operations of:
∘ opening an avoidance time window of a predetermined duration on receipt of an avoidance triggering message generated from the detection of the object by the sensor
∘ generation of an authorization to implement the assistance to the first lateral maneuver for the duration of the avoidance time window;
∘ when the predetermined duration of the avoidance time window has elapsed, generation of a prohibition to implement the assistance to the first lateral maneuver.

9. A vehicle comprising the safety device according to claim 8.
